# EUROPÄISCHE PATENTSCHRIFT

(11) **EP 3 141 867 B1**
(45) Veröffentlichungstag und Bekanntmachung des Hinweises auf die Patenterteilung: **05.08.2020**
(21) Anmeldenummer: 16188639.5
(22) Anmeldetag: 13.09.2016
(51) Int. Cl.: G01C 21/30

(54) **VERFAHREN UND VORRICHTUNG ZUM SYNCHRONISIEREN EINER ERSTEN LOKALEN UMFELDKARTE MIT EINER ZWEITEN LOKALEN UMFELDKARTE IN EINEM UMFELD EINES KRAFTFAHRZEUGS**
METHOD AND DEVICE FOR SYNCHRONIZING A FIRST LOCAL ENVIRONMENT MAP WITH A SECOND LOCAL ENVIRONMENT MAP IN AN ENVIRONMENT OF A MOTOR VEHICLE
PROCEDE ET DISPOSITIF DE SYNCHRONISATION D'UNE PREMIERE CARTE D'ENVIRONNEMENT AVEC UNE SECONDE CARTE D'ENVIRONNEMENT DANS UN ENVIRONNEMENT D'UN VEHICULE AUTOMOBILE

(30) Priorität: 14.09.2015 DE 102015217497
(43) Veröffentlichungstag der Anmeldung: 15.03.2017
(73) Patentinhaber: Volkswagen AG, 38440 Wolfsburg (DE)
(72) Erfinder: MAX, Stephan, 38518 Gifhorn (DE); KLOMP, Sven, 31311 Uetze (DE); BÜSCHENFEDLD, Torsten, 31311 Uetze (DE)
(74) Vertreter: Zucker, Volker

(56) Entgegenhaltungen:
- EP-A1- 1 403 137
- EP-A1- 1 522 824
- EP-A2- 1 065 642
- EP-A2- 1 486 377

## Beschreibung

Die Erfindung betrifft ein Verfahren und eine Vorrichtung zum Synchronisieren einer ersten lokalen Umfeldkarte mit einer zweiten lokalen Umfeldkarte in einem Umfeld eines Kraftfahrzeugs.

Moderne Kraftfahrzeuge weisen eine Vielzahl von Assistenzsystemen auf, welche den Fahrer beim Führen des Fahrzeugs unterstützen. Vermehrt kommen dabei semi-autonome und autonome Systeme zum Einsatz, die eine semi- oder vollautomatische Steuerung des Kraftfahrzeugs erlauben.

Es ist bekannt, Kraftfahrzeuge mit Hilfe eines Assistenzsystems automatisiert auf Trajektorien fahren zu lassen. Beispielsweise können auf diese Weise Stellplätze in Garagen oder auf Parkplätzen automatisiert oder halb-automatisiert vom Kraftfahrzeug angesteuert werden. Dazu wird in der Regel das Umfeld des Kraftfahrzeugs von einer Sensorik erfasst und das Kraftfahrzeug mit Hilfe der von der Sensorik erzeugten Umfelddaten in einer hinterlegten Umfeldkarte lokalisiert. Erkennt das Kraftfahrzeug ein Umfeld, in dem eine Trajektorie hinterlegt ist, so bietet sie dem Fahrer des Kraftfahrzeugs die Trajektorie an. Eine hinterlegte Trajektorie kann dann abgerufen werden und das Kraftfahrzeug wird von dem Assistenzsystem automatisiert oder halb-automatisiert auf der Trajektorie in den Parkplatz gesteuert.

Ferner ist bekannt, mehrere Sensoriken gleicher oder unterschiedlicher Art einzusetzen, um das Umfeld eines Kraftfahrzeugs zu erfassen. Die Verwendung mehrerer Sensoriken ist beispielsweise zweckmäßig, wenn die einzelnen Sensoriken unterschiedliche Auflösungen aufweisen oder sich beispielsweise hinsichtlich der Bereiche unterscheiden, in denen sie im Umfeld des Kraftfahrzeugs eingesetzt werden können. Die von den mehreren Sensoriken erfassten Umfelddaten unterscheiden sich dann in der Regel nach Art und Aufbau. Beispielsweise können sich die erfassten Umfelddaten hinsichtlich eines Dynamikbereiches oder einer Auflösung voneinander unterscheiden. Aus den erfassten Umfelddaten wird dann jeweils eine eigene Umfeldkarte erzeugt. Die erzeugten Umfeldkarten sind auf Grund der unterschiedlichen Art und des unterschiedlichen Aufbaus der Umfelddaten gegeneinander freilaufend, das heißt, sie können sich hinsichtlich einer Position, einer Orientierung und einer Auflösung unterscheiden.

Werden nun Trajektorien in oder zu den einzelnen erzeugten Umfeldkarten hinterlegt, so sind auch hinterlegte Trajektorien, die zu derselben physikalischen Trajektorie gehören, gegeneinander freilaufend.

Eine mögliche Lösung dieses Problems ist eine Fusionierung der erfassten Umfelddaten der mehreren Sensoriken in einer einzigen Umfeldkarte. Dazu muss jedoch ein großes Volumen an Umfelddaten übertragen werden. Nicht immer steht dafür eine breitbandige Kommunikationsschnittstelle im Kraftfahrzeug zur Verfügung. So ist beispielsweise der in Kraftfahrzeugen weit verbreitete Controller Area Network (CAN)-Bus mit seinen typischen Bitraten von maximal 1 Mbit/s dafür ungeeignet.

Aus der EP 1 486 377 A2 ist eine Umfeldbeobachtungsvorrichtung für einen beweglichen Körper bekannt, mit einer Umgebungsinformationserfassungseinrichtung zum Erfassen und Speichern von Informationen über eine Umgebung um einen beweglichen Körper, einer Informationserfassungseinrichtung eines beweglichen Körpers zum Erfassen und Speichern einer Position und Haltung des beweglichen Körpers, einer Informationskombiniereinrichtung zum Kombinieren der durch die Informationserfassungseinrichtung eines beweglichen Körpers erfassten Informationen und der durch die Umgebungsinformationserfassungseinrichtung erfassten Informationen, Korrigieren einer relativen Beziehung von Positionen und Haltung zwischen dem beweglichen Körper und der Umgebung um den beweglichen Körper, und Ausgeben von Informationen einer solchen relativen Beziehung. Weiter ist eine Erzeugungseinrichtung einer spezifischen Ansicht und eine Anzeigeeinrichtung vorgesehen. Eine Erfassungseinrichtung eines bewegten Hindernisses zum Erfassen eines Hindernisses ist weiter vorgesehen, wobei eine Anzeigesteuereinrichtung darauf basierend die spezifische Ansicht anzeigt.

Aus der EP 1 403 137 A1 ist eine Zustandsüberwachungsvorrichtung eines beweglichen Körpers bekannt, mit einer Umgebungsinformationserfassungseinrichtung, einer Wegabschätzeinrichtung sowie einer Distanzbestimmungseinrichtung zum Identifizieren eines Gegenstandes, der entlang des abgeschätzten Bewegungsweges des beweglichen Körpers auftritt, und zum Bestimmen der kürzesten Distanz entlang des abgeschätzten Bewegungsweges des beweglichen Körpers zwischen einem Abschnitt des beweglichen Körpers und einem Abschnitt des Gegenstandes, die einander berühren, wenn sich der bewegliche Körper entlang des abgeschätzten Bewegungsweges des beweglichen Körpers bewegt. Weiter ist eine Hinweiseinrichtung vorgesehen, zum Hinweisen auf eine Positionsbeziehung zwischen dem beweglichen Körper und dem Gegenstand basierend auf dem durch die Distanzbestimmungseinrichtung erfassten Ergebnis.

Aus der EP 1 065 642 A2 ist ein Fahrzeugfahrunterstützungssystem bekannt, umfassend eine Kamera zur Erfassung eines Bildes eines Bereichs, der in einer Bewegungsrichtung eines Fahrzeugs liegt, ein Anzeigemittel zur Anzeige des von der Kamera erfassten Bildes, ein Lenkwinkel-Detektionsmittel und ein Fahrzeugwegverlauf-Vorhersagemittel um einen Fahrwegverlauf des Fahrzeugs auf der Grundlage des durch das Lenkwinkel-Detektionsmittel detektierten Lenkwinkel zu prognostizieren. Weiter ist ein Fahrunterstützungsmittel vorgesehen zur Überlagerung auf dem Anzeigemittel von Fahrunterstützungsinformationen, die den durch das Fahrwegverlauf-Vorhersagemittel prognostizierten voraussichtlichen Fahrwegverlauf und Führungslinien, die sich durch Verlängerung der die Fahrzeugkarosseriebreite definierenden Linien ergeben, beinhalten, auf dem Bild des Bereichs, der in der Bewegungsrichtung des Fahrzeugs liegt. Das Fahrunterstützungsmittel ist derart ausgelegt, eine Linie, die auf eine Stoppposition des Fahrzeugs hinweist, an einer Position auf dem prognostizierten Fahrzeugverlauf und/oder der Führungslinie anzuzeigen, wo die Linie in der Nähe des Fahrzeugs angeordnet ist.

Aus der EP 1 522 824 A1 ist eine Datenverarbeitungseinheit für Assistenzeinrichtungen in Kraftfahrzeugen bekannt, mit einer Eingangsschnittstelle für Straßennetzdaten und einer Eingangsschnittstelle für Umfelddaten von mindestens einem zur Aufnahme von Informationen über das Umfeld des Kraftfahrzeugs vorgesehenen Umfeldsensoren. Die Datenverarbeitungseinheit hat Mittel zur Zusammenführung der Straßennetzdaten und der Umfelddaten, um die Straßennetzdaten mit den Umfelddaten zu aktualisieren, zu modifizieren und/oder zu ergänzen und/oder die Umfelddaten mittels der Straßennetzdaten zu modifizieren. Weiter hat die Datenverarbeitungseinheit eine Ausgabeschnittstelle zur Weitergabe der der zusammengeführten Straßennetz- und Umfelddaten als fusionierte Situationsdaten in einem einheitlichen Datenprotokoll an mindestens eine Assistenzeinrichtung.

Der Erfindung liegt also das technische Problem zu Grunde, ein Verfahren und eine Vorrichtung zum Synchronisieren einer ersten lokalen Umfeldkarte mit einer zweiten lokalen Umfeldkarte in einem Umfeld eines Kraftfahrzeugs zur Verfügung zu stellen, bei denen eine Synchronisation zwischen den einzelnen Umfeldkarten vorgenommen wird, ohne dass ein großes Datenvolumen übertragen werden muss.

Die technische Aufgabe wird erfindungsgemäß durch ein Verfahren mit den Merkmalen des Patentanspruchs 1 und eine Vorrichtung mit den Merkmalen des Patentanspruchs 8 gelöst. Vorteilhafte Ausgestaltungen der Erfindung ergeben sich aus den Unteransprüchen.

Dazu werden ein Verfahren nach Anspruch 1 und eine Vorrichtung nach Anspruch 7 zum Synchronisieren einer ersten lokalen Umfeldkarte mit einer zweiten lokalen Umfeldkarte in einem Umfeld eines Kraftfahrzeugs zur Verfügung gestellt.

Der Grundgedanke der Erfindung liegt darin, eine erste und eine zweite lokale Umfeldkarte über jeweils eine in diesen ersten und zweiten lokalen Umfeldkarten hinterlegte Trajektorie zu synchronisieren. Dabei sollen die beiden hinterlegten Trajektorien eine identische physikalische Trajektorie beschreiben, welche lediglich von unterschiedlichen Sensoriken erfasst wurden und in zwei lokale Umfeldkarten hinterlegt wurden. Zum Synchronisieren wird in einer der beiden lokalen Umfeldkarten aus einer aktuellen Position des Kraftfahrzeugs eine relative Position zu der ersten Trajektorie bestimmt. Die relative Position umfasst dabei sowohl eine Position im Sinne von Koordinaten, beispielsweise zweidimensionale (x- und y-)Koordinaten, als auch eine Orientierung des Kraftfahrzeugs bezüglich der ersten Trajektorie. Ist die relative Position bestimmt, so wird sie in Bezug auf die zweite Trajektorie ausgewertet, um eine weitere aktuelle Position des Kraftfahrzeugs in der zweiten lokalen Umfeldkarte zu bestimmen. Der Vorteil ist, dass zum Synchronisieren der ersten und der zweiten lokalen Umfeldkarte nur sehr wenige Daten bestimmt und ausgetauscht werden müssen.

Dies ist vor allem bei komplett integrierten Sensoriken von Vorteil. Eine komplett integrierte Sensorik soll hier eine Einrichtung bezeichnen, bei der eine Sensorik, eine Steuerung und eine Synchronisationseinrichtung zusammengefasst wurden. Eine solche Einrichtung kann eigenständig verwendet werden, um beispielsweise eine lokale Umfeldkarte zu erstellen und das Kraftfahrzeug in dieser lokalen Umfeldkarte zu lokalisieren. Ebenfalls möglich soll ein Erfassen und Hinterlegen einer Trajektorie des Kraftfahrzeugs in dem Umfeld sein. Mehrere dieser komplett integrierten Sensoriken können dann durch Austausch einer sehr geringen Datenmenge synchronisiert werden. Ein gemeinsames Verwenden im Verbund wird somit vereinfacht, Bandbreite einer Kommunikationseinrichtung des Kraftfahrzeugs, beispielsweise eines CAN-Busses, wird gespart und Kraftfahrzeuge können kostensparender und einfacher nachgerüstet werden.

Die komplett integrierten Sensoriken können beispielsweise eine kamerabasierte Sensorik oder eine ultraschallbasierte Sensorik sein. Die kamerabasierte Sensorik wird dann zum Bestimmen der aktuellen Position des Kraftfahrzeugs verwendet, wohingegen die ultraschallbasierte Sensorik beispielsweise zum Steuern einer automatisierten Fahrt, bei der vor allem eine Hinderniserkennung im nahen Umfeld des Kraftfahrzeugs wichtig ist, verwendet wird. Liegt in beiden komplett integrierten Sensoriken jeweils eine hinterlegte Trajektorie vor, welche die gleiche physikalische Trajektorie im Umfeld beschreiben, so lassen sich über das Bestimmen der relativen Position lokale Umfeldkarten in der kamerabasierten und der ultraschallbasierten Sensorik synchronisieren. Die kamerabasierte Sensorik kann somit beispielsweise für das Bestimmen der aktuellen Position des Kraftfahrzeugs im Umfeld verwendet werden. Das Steuern der automatisierten Fahrt wird nach Synchronisieren der beiden lokalen Umfeldkarten hingegen mittels der für die Hinderniserkennung im Nahbereich des Kraftfahrzeugs deutlich besser geeigneten ultraschallbasierten Sensorik durchgeführt.

Prinzipiell lassen sich erfindungsgemäß verschiedene Sensoriken oder komplett integrierte Sensoriken als verteilte Systeme in einem Kraftfahrzeug verwenden und miteinander synchronisieren, ohne dass große Datenmengen zwischen ihnen ausgetauscht werden müssen.

Das Verfahren kann insbesondere beim automatisierten oder teil-automatisierten Fahren zur Anwendung kommen. Dann ist zusätzlich vorgesehen, dass nach dem Synchronisieren der ersten lokalen Umfeldkarte mit der zweiten lokalen Umfeldkarte ein Automatisiertes Fahren entlang der zweiten Trajektorie durch Steuern mindestens einer Aktorik des Kraftfahrzeugs durch die zweite Steuerung durchgeführt wird.

Andererseits kann das Verfahren auch lediglich als Navigationshilfe für einen Fahrer des Kraftfahrzeugs bei einer manuellen Fahrt des Kraftfahrzeugs dienen. Dazu können die erste und die zweite lokale Umfeldkarte sowie die relative Position und die aktuellen Positionen in den Umfeldkarten beispielsweise auch anderen Systemen des Kraftfahrzeugs, beispielsweise Anzeigeeinrichtungen oder Navigationssystemen, zur Verfügung gestellt werden.

Dabei ist vorgesehen, dass Datenpunkte der Trajektorien jeweils mit Zeitstempeln markiert sind oder werden, wobei die Zeitstempel der ersten Trajektorie und der zweiten Trajektorie die gleiche Zeitbasis aufweisen, und wobei das Synchronisieren folgende Schritte in der ersten Steuerung umfasst: Bestimmen eines nächsten orthogonalen Punktes auf der ersten Trajektorie, wobei der nächste orthogonale Punkt durch einen Punkt auf der ersten Trajektorie gebildet wird, an dem eine kürzeste Differenzgerade zwischen der aktuellen Position des Kraftfahrzeugs und der ersten Trajektorie auf einer Tangente an der ersten Trajektorie senkrecht steht, Bestimmen eines mit dem nächsten orthogonalen Punkt korrespondierenden Zeitstempels t_{N} auf der ersten Trajektorie; und wobei das Synchronisieren anschließend ferner folgende Schritte in der zweiten Steuerung umfasst: Aufsuchen eines mit dem bestimmten Zeitstempel t_{N} korrespondierenden Punktes auf der zweiten Trajektorie, Bestimmen einer weiteren aktuellen Position des Kraftfahrzeugs in der zweiten lokalen Umfeldkarte durch vektorielles Addieren der kürzesten Differenzgeraden am korrespondierenden Punkt auf der zweiten Trajektorie, wobei die kürzeste Differenzgerade senkrecht auf einer Tangente am korrespondierenden Punkt steht. Auf Grund der Tatsache, dass die kürzeste Differenzgerade auf der jeweiligen Tangente senkrecht steht, gibt es eine eindeutige Richtung, bezüglich welcher die kürzeste Differenzgerade am korrespondierenden Punkt addiert wird. Der Vorteil ist, dass das Synchronisieren besonders einfach durchgeführt werden kann: die relative Position besteht lediglich aus einem Tupel, welches den Zeitstempel t_{N} und eine Beschreibung der kürzesten Differenzgeraden umfasst.

Bei einer Ausführungsform ist vorgesehen, dass das Synchronisieren ein Austauschen von Daten zwischen der ersten Steuerung und der zweiten Steuerung umfasst, wobei die Daten über eine Schnittstelle und/oder Bus übertragen werden. Der Vorteil ist, dass beispielsweise auf bereits vorhandene Infrastruktur zurückgegriffen werden kann. So kann der in vielen Kraftfahrzeugen bereits vorhandene und etablierte CAN-Bus zum Austausch der Daten verwendet werden. Ein Auf- oder Nachrüsten eines Kraftfahrzeugs mit Sensoriken oder komplett integrierten Sensoriken ist somit leichter und kostengünstiger.

In einer Ausführungsform ist dabei vorgesehen, dass die Daten lediglich den korrespondierenden Zeitstempel t_{N} und eine Länge und eine Orientierung der kürzesten Differenzgeraden umfassen. Der Vorteil ist, dass die Datenmenge, die übermittelt werden muss, äußerst gering ist. Es muss lediglich ein Tupel aus drei Datenobjekten ausgetauscht werden. Dies spart Bandbreite. Somit kann vorhandene Infrastruktur für Kommunikation im Kraftfahrzeug mit- oder weiterverwendet werden. Dadurch werden Kosten und Aufwand gespart.

In einer Ausführungsform ist vorgesehen, dass das Bereitstellen der ersten Trajektorie und das Bereitstellen der zweiten Trajektorie ein Erfassen der ersten Trajektorie und ein Erfassen der zweiten Trajektorie umfasst, wobei den Datenpunkten der ersten Trajektorie und den Datenpunkten der zweiten Trajektorie zeitgleich mit dem jeweiligen Erfassen die Zeitstempel zugeordnet werden. Das Erfassen der ersten und der zweiten Trajektorie kann beispielsweise gemeinsam bei einer Lernfahrt erfolgen. Dazu fährt ein Fahrer mit dem Kraftfahrzeug die gewünschte Trajektorie, beispielsweise eine physikalische Trajektorie, welche den Weg von einer Einfahrt zu einem Parkplatz in einer Garage beschreibt, in der Lernfahrt ab. Die von der ersten und der zweiten Sensorik erfassten Umfelddaten werden dann in den Steuerungen dazu genutzt, die erste Trajektorie in der ersten lokalen Umfeldkarte zu hinterlegen und die zweite Trajektorie in der zweiten lokalen Umfeldkarte zu hinterlegen. Während des Erfassens werden die einzelnen Datenpunkte der ersten Trajektorie und der zweiten Trajektorie mit Zeitstempeln versehen, wobei die Zeitstempel eine gemeinsame Zeitbasis, beispielsweise eine Systemzeit des Kraftfahrzeugs, aufweisen.

In einer Ausführungsform ist vorgesehen, dass das Synchronisieren ein räumliches Interpolieren der ersten Trajektorie und/oder der zweiten Trajektorie umfasst. Dies ist zweckmäßig, wenn zu einem nächsten orthogonalen Punkt kein hinterlegter Punkt auf der ersten bzw. der zweiten Trajektorie vorhanden ist. Dann wird zwischen den zwei nächsten Datenpunkten interpoliert. Dabei kann das Interpolieren beispielsweise einfach linear erfolgen, es können aber auch andere Verfahren genutzt werden, beispielsweise eine kubische Spline-Interpolation.

In einer weiteren Ausführungsform ist vorgesehen, dass das Synchronisieren ein zeitliches Interpolieren der Zeitstempel der ersten Trajektorie und/oder der zweiten Trajektorie umfasst. Dies ist zweckmäßig, wenn zu einem nächsten orthogonalen Punkt kein hinterlegter Punkt auf der ersten bzw. der zweiten Trajektorie somit auch kein korrespondierender Zeitstempel t_{N} vorhanden ist. Dann wird zwischen den Zeitstempeln der zwei nächsten Datenpunkte interpoliert. Dabei kann das Interpolieren beispielsweise einfach linear erfolgen, es können aber auch andere Verfahren genutzt werden, beispielsweise eine kubische Spline-Interpolation.

Teile der Vorrichtung und/oder der Funktionen der Vorrichtung können auch als Kombination von Hardware und Software ausgebildet sein, beispielsweise in Form eines Mikrocontrollers oder Mikroprozessors, auf dem ein entsprechender Programmcode ausgeführt wird.

Nachfolgend wird die Erfindung anhand von Ausführungsbeispielen unter Bezugnahme auf die Figuren näher erläutert. Hierbei zeigen:
- Fig. 1: eine schematische Darstellung einer Ausführungsform der Vorrichtung in einem Kraftfahrzeug zum automatisierten Fahren eines Kraftfahrzeugs in einem Umfeld;
- Fig. 2: eine schematische Darstellung einer ersten und einer zweiten Trajektorie in einer ersten und einer zweiten lokalen Umfeldkarte zur Verdeutlichung des freilaufenden Verhaltens;
- Fig. 3a-3f: schematische Darstellungen der Verfahrensschritte zum Synchronisieren einer ersten mit einer zweiten lokalen Umfeldkarte;
- Fig. 4: ein schematisches Ablaufdiagramm des Verfahrens zum automatisierten Fahren eines Kraftfahrzeugs in einem Umfeld.

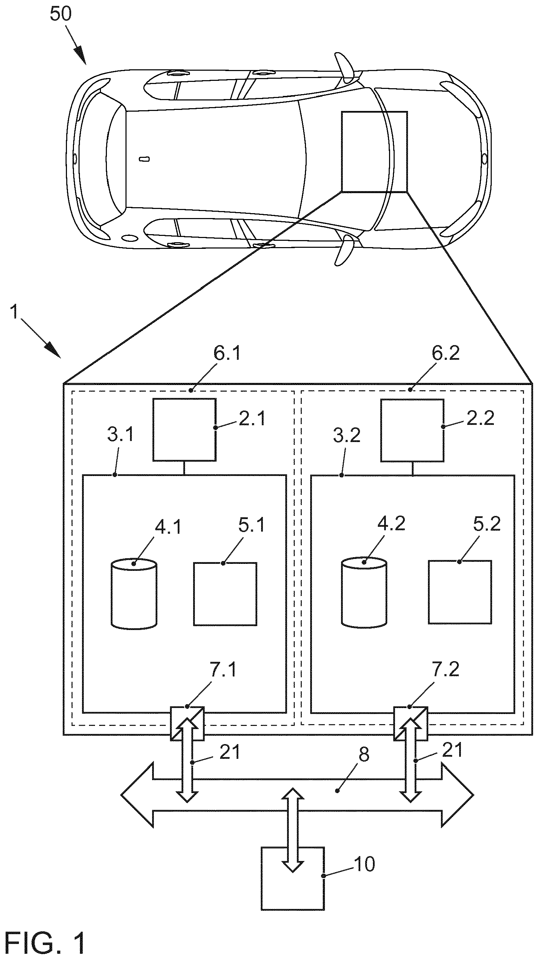

Fig. 1 zeigt eine schematische Darstellung einer Ausführungsform der Vorrichtung 1 in einem Kraftfahrzeug 50 zum automatisierten Fahren des Kraftfahrzeugs 50 in einem Umfeld. Die Vorrichtung 1 umfasst eine erste Sensorik 2.1, eine zweite Sensorik 2.2, eine erste Steuerung 3.1 und eine zweite Steuerung 3.2. Die erste Steuerung 3.1 umfasst dabei einen Speicher 4.1 zum Speichern einer ersten lokalen Umfeldkarte und einer ersten Trajektorie und eine ersten Synchronisationseinrichtung 5.1. Die zweite Steuerung 3.2 umfasst dabei einen Speicher 4.2 zum Speichern einer zweiten lokalen Umfeldkarte und einer zweiten Trajektorie und eine zweite Synchronisationseinrichtung 5.2. Die erste Steuerung 3.1 weist eine erste Schnittstelle 7.1, die zweite Steuerung 3.2 eine zweite Schnittstelle 7.2 auf. Beide Schnittstellen 7.1, 7.2 sind über einen CAN-Bus 8 miteinander verbunden, wodurch eine Kommunikation zwischen der ersten Steuerung 3.1 und der zweiten Steuerung 3.2 möglich ist.

Die erste Sensorik 2.1 und die erste Steuerung 3.1 sind zu einer ersten komplett integrierten Sensorik 6.1 zusammengefasst. Die zweite Sensorik 2.2 und die zweite Steuerung 3.2 sind zu einer zweiten komplett integrierten Sensorik 6.2 zusammengefasst.

Die erste Sensorik 2.1 erfasst ein Umfeld des Kraftfahrzeugs 50 und erzeugt erste Umfelddaten. Zeitgleich erfasst die zweite Sensorik 2.2 das Umfeld des Kraftfahrzeugs 50 und erzeugt zweite Umfelddaten. Die erste Steuerung 3.1 stellt eine erste lokale Umfeldkarte bereit. Das Bereitstellen kann dabei auch ein Erstellen oder Aktualisieren der ersten lokalen Umfeldkarte aus den erfassten ersten Umfelddaten umfassen. Zusätzlich stellt die erste Steuerung 3.1 eine erste Trajektorie in der ersten lokalen Umfeldkarte bereit. Die zweite Steuerung 3.2 stellt eine zweite lokale Umfeldkarte bereit. Das Bereitstellen kann dabei auch ein Erstellen oder Aktualisieren der zweiten lokalen Umfeldkarte aus den erfassten zweiten Umfelddaten umfassen. Zusätzlich stellt die zweite Steuerung 3.2 eine zweite Trajektorie in der zweiten lokalen Umfeldkarte bereit.

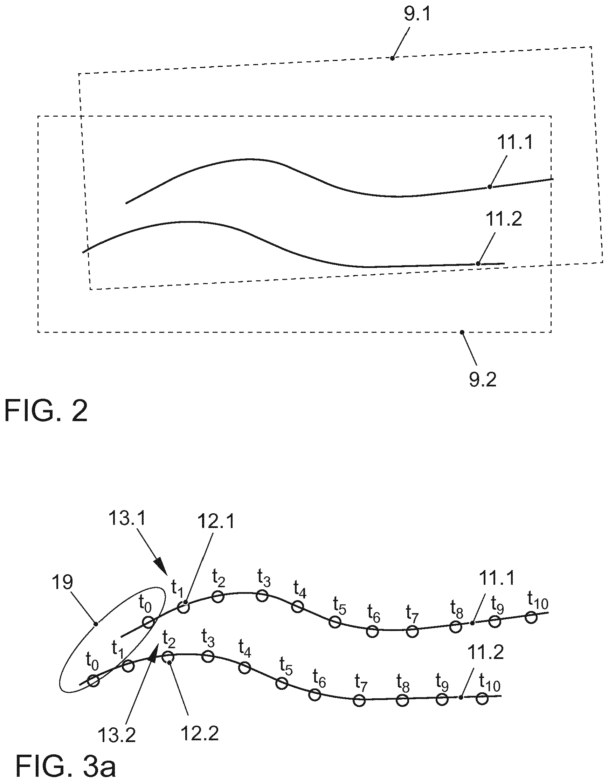

Die erste Steuerung 3.1 bestimmt nun eine aktuelle Position des Kraftfahrzeugs 50 in der ersten lokalen Umfeldkarte. Dies kann beispielsweise durch Auswerten der erfassten ersten Umfelddaten und Vergleich der Umfelddaten mit der ersten lokalen Umfeldkarte erfolgen. Ist die aktuelle Position in der ersten lokalen Umfeldkarte bestimmt, so bestimmt die erste Steuerung 3.1 eine relative Position des Kraftfahrzeugs 50 relativ zu der ersten Trajektorie in der ersten lokalen Umfeldkarte. Die relative Position umfasst dabei sowohl eine Position in einem Koordinatensystem als auch eine Orientierung des Kraftfahrzeugs in Bezug auf die erste Trajektorie. Das Bestimmen der relativen Position kann beispielsweise in dem wie in den Figuren 3a bis 3f geschilderten Verfahren durchgeführt werden. Ist die relative Position bestimmt, so werden zugehörige Parameter, wie beispielsweise ein Zeitstempel t_{N} und Parameter einer kürzesten Differenzgeraden von der ersten Steuerung 3.1 als Daten 21 über die erste Schnittstelle 7.1 und über den CAN-Bus 8 über die zweite Schnittstelle 7.2 an die zweite Steuerung 3.2 übermittelt. Ein übermitteltes Datentupel hat dabei den Vorteil, dass erfindungsgemäß nur eine sehr kleine Datenmenge übertragen werden muss, wodurch die Bandbreite des CAN-Busses nur gering beansprucht wird.

Die zweite Steuerung 3.2 empfängt über die zweite Schnittstelle 7.2 das Datentupel, beispielsweise den Zeitstempel t_{N} und die Parameter der kürzesten Differenzgeraden. Die zweite Steuerung 3.2 bestimmt nun eine weitere aktuelle Position des Kraftfahrzeugs 50 in der zweiten lokalen Umfeldkarte, indem sie die relative Position in Bezug auf die zweite in der zweiten lokalen Umfeldkarte hinterlegte Trajektorie auswertet. Dies kann beispielsweise nach dem in den Figuren 3a bis 3f gezeigten Verfahren durchgeführt werden. Ist die weitere aktuelle Position in der zweiten lokalen Umfeldkarte bestimmt, so wird eine automatisierte Fahrt entlang der zweiten Trajektorie durchgeführt. Dazu steuert die zweite Steuerung 3.2 mindestens eine Aktorik 10 des Kraftfahrzeugs 50 über die Schnittstelle 7.2 und den CAN-Bus 8. Das Steuern kann dabei sowohl ein direktes Steuern individueller Manöver der Aktorik 10 als auch ein Übermitteln der aktuellen Position und der zweiten Trajektorie, einschließlich ein anschließendes Aktivieren der automatisierten Fahrt, bedeuten.

Fig. 2 zeigt schematisch eine erste lokale Umfeldkarte 9.1 und eine zweite lokale Umfeldkarte 9.2. In der ersten lokalen Umfeldkarte 9.1 ist eine erste Trajektorie 11.1 hinterlegt und in der zweiten lokalen Umfeldkarte 9.2 ist eine zweite Trajektorie 11.2 hinterlegt. Die erste Trajektorie 11.1 und die zweite Trajektorie 11.2 wurden beispielsweise von einer ersten Sensorik und einer zweiten Sensorik zeitgleich erfasst und beschreiben eine identische physikalische Trajektorie eines Kraftfahrzeugs in einem Umfeld, jedoch jeweils bezüglich der ersten lokalen Umfeldkarte 9.1 und der zweiten lokalen Umfeldkarte 9.2. Die erste lokale Umfeldkarte 9.1 und die zweite lokale Umfeldkarte 9.2 und somit auch die erste Trajektorie 11.1 und die zweite Trajektorie 11.2 sind freilaufend, das heißt ihre Koordinaten sind nicht miteinander synchronisiert, beispielsweise über gemeinsame Referenz- oder Triggerpunkte. So kann es beispielsweise sein, dass - wie hier gezeigt - die erste lokale Umfeldkarte 9.1 und die zweite lokale Umfeldkarte 9.2 und somit die erste Trajektorie 11.1 und die zweite Trajektorie 11.2 transversal gegeneinander verschoben und bezüglich eines Drehpunktes gegeneinander verdreht sind. Daraus folgen beim Lokalisieren und beim automatisierten Fahren des Kraftfahrzeugs Probleme, wenn beide Sensoriken im Verbund miteinander verwendet werden sollen. Ein Ergebnis einer Auswertung von erfassten Umfelddaten beider Sensoriken führt dann unter Umständen zu Widersprüchen, die die automatisierte Fahrt behindern oder vereiteln können.

Im Folgenden werden die Bezugszeichen und schematischen Andeutungen der ersten und der zweiten lokalen Umfeldkarte aus Gründen der Übersichtlichkeit weggelassen. Die Figuren 3a bis 3f zeigen ein Synchronisieren von einer ersten lokalen Umfeldkarte mit einer zweiten lokalen Umfeldkarte in einem erfindungsgemäßen Verfahren. Im ersten Schritt (Fig. 3a) des Synchronisierens werden Datenpunkte 12.1 der ersten Trajektorie 11.1 und Datenpunkte 12.2 der zweiten Trajektorie 11.2 mit Zeitstempeln tᵢ 13.1, 13.2 markiert. Dies kann beispielsweise beim Erfassen der ersten Trajektorie 11.1 und der zweiten Trajektorie 11.2 durchgeführt werden. Wichtig dabei ist, dass die Zeitstempel 13.1, 13.2 beider Trajektorien 11.1, 11.2 die gleiche Zeitbasis 19 aufweisen. Dabei können die Zeitstempel 13.1, 13.2 für die einzelnen Datenpunkte 12.1, 12.2 der ersten Trajektorie 11.1 und der zweiten Trajektorie 11.2 selber aber unterschiedlich sein, beispielsweise wenn eine Samplingrate beim Erfassen unterschiedlich ist.

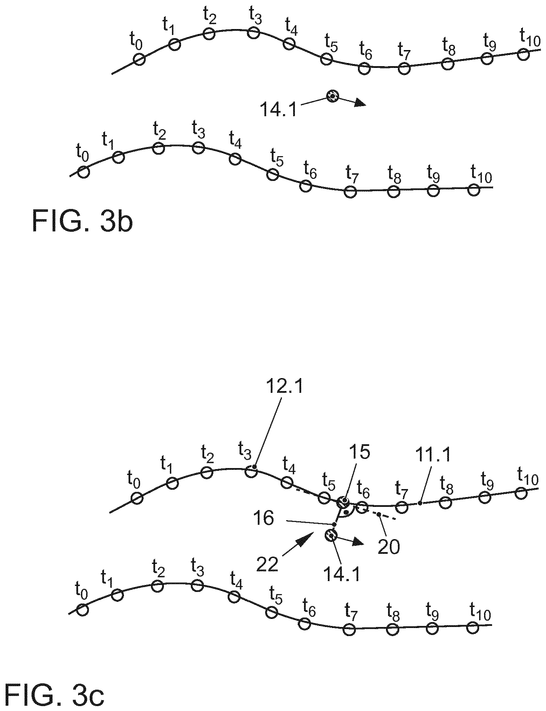

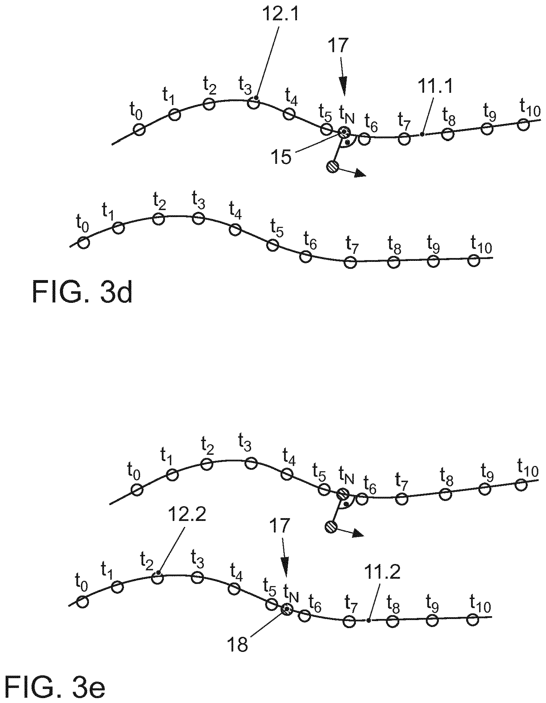

Im nächsten Schritt (Fig. 3b) wird in der ersten Umfeldkarte eine aktuelle Position 14.1 des Kraftfahrzeugs 50 bestimmt. Anschließend (Fig. 3c) wird zum Bestimmen einer relativen Position 22 des Kraftfahrzeugs zur ersten Trajektorie 11.1 ein nächster orthogonaler Punkt 15 auf der ersten Trajektorie 11.1 bestimmt, wobei der nächste orthogonale Punkt 15 durch einen Punkt auf der ersten Trajektorie 11.1 gebildet wird, an dem eine kürzeste Differenzgerade 16 zwischen der aktuellen Position 14.1 des Kraftfahrzeugs und der ersten Trajektorie 11.1 auf einer Tangente an der ersten Trajektorie 11.1 senkrecht steht. Dabei wird zwischen den Datenpunkten 12.1 der ersten Trajektorie 11.1, wenn zweckmäßig, räumlich interpoliert. Im nächsten Schritt (Fig. 3d) wird zu dem nächsten orthogonalen Punkt 15 ein korrespondierender Zeitstempel t_{N} 17 bestimmt. Dabei wird zwischen den Datenpunkten 12.1 der ersten Trajektorie 11.1, wenn zweckmäßig, zeitlich interpoliert.

Ist der Zeitstempel t_{N} 17 bestimmt, so wird im nächsten Schritt (Fig. 3e) ein mit dem Zeitstempel t_{N} 17 korrespondierender Punkt 18 auf der zweiten Trajektorie 11.2 bestimmt. Dabei können Datenpunkte 12.2 der zweiten Trajektorie 11.2 sowohl räumlich als auch zeitlich interpoliert werden, sofern dies zweckmäßig ist.

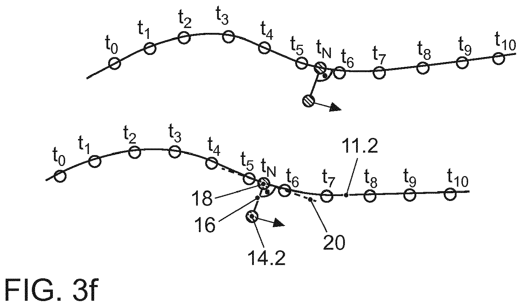

Im letzten Schritt (Fig. 3f) wird die kürzeste Differenzgerade 16 vektoriell zu dem korrespondierenden Punkt 18 addiert und darüber eine weitere aktuelle Position 14.2 des Kraftfahrzeugs in der zweiten lokalen Umfeldkarte bestimmt.

Die aktuelle Position 14.1 des Kraftfahrzeugs wurde somit in der ersten lokalen Umfeldkarte bestimmt. Daraus wurde eine relative Position 22 bestimmt, worüber die erste und die zweite lokale Umfeldkarte synchronisiert wurden. Über die relative Position 22 wurde das Kraftfahrzeug anschließend in der zweiten lokalen Umfeldkarte lokalisiert. Ein Steuern des Kraftfahrzeugs entlang der zweiten Trajektorie 11.2 in der zweiten lokalen Umfeldkarte ist nun problemlos möglich. Zum Synchronisieren müssen dabei lediglich der Zeitstempel t_{N} 17 und Parameter der kürzesten Differenzgeraden 16 bestimmt und übermittelt werden.

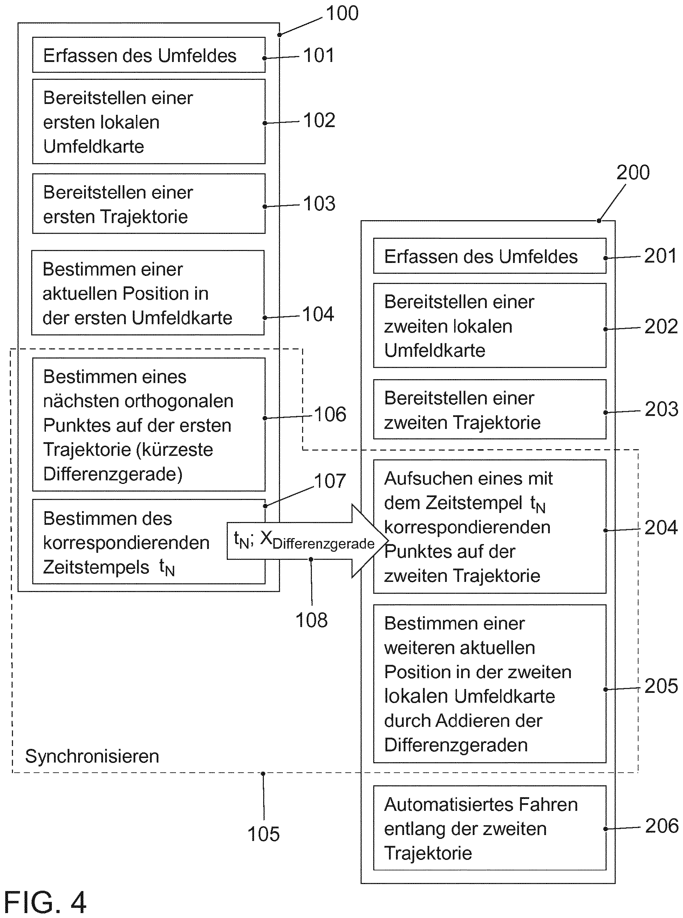

Fig. 4 zeigt ein schematisches Ablaufdiagramm des Verfahrens zum automatisierten Fahren eines Kraftfahrzeugs in einem Umfeld. Dabei werden die Verfahrensschritte 100 beispielsweise von einer ersten komplett integrierten Sensorik ausgeführt und die Verfahrensschritte 200 beispielsweise von einer zweiten komplett integrierten Sensorik. Im ersten Verfahrensschritt wird das Umfeld des Kraftfahrzeugs von einer ersten Sensorik der ersten komplett integrierten Sensorik erfasst 101. Im nächsten Verfahrensschritt wird eine erste lokale Umfeldkarte bereitgestellt 102. Das Bereitstellen kann dabei auch ein Erstellen der ersten lokalen Umfeldkarte umfassen. Ebenfalls wird eine erste Trajektorie in der ersten lokalen Umfeldkarte bereitgestellt 103. Das Bereitstellen der ersten Trajektorie kann dabei auch ein Erfassen der ersten Trajektorie umfassen. Anschließend wird eine aktuelle Position des Kraftfahrzeugs in der ersten lokalen Umfeldkarte bestimmt 104.

Parallel dazu werden die Verfahrensschritte 200, ausgeführt. Im ersten der Verfahrensschritte 200 wird das Umfeld des Kraftfahrzeugs von einer Sensorik der zweiten komplett integrierten Sensorik erfasst 201. Im nächsten Verfahrensschritt wird eine zweite lokale Umfeldkarte bereitgestellt 202. Das Bereitstellen kann dabei auch ein Erstellen der zweiten lokalen Umfeldkarte umfassen. Ebenfalls wird eine zweite Trajektorie in der zweiten lokalen Umfeldkarte bereitgestellt 203. Das Bereitstellen der zweiten Trajektorie kann dabei auch ein Erfassen der zweiten Trajektorie umfassen.

Die Verfahrensschritte 105 umfassen ein Synchronisieren der ersten lokalen Umfeldkarte mit der zweiten lokalen Umfeldkarte. Dazu wird aus der aktuellen Position des Kraftfahrzeugs ein nächster orthogonaler Punkt auf der ersten Trajektorie über eine kürzeste Differenzgerade bestimmt 106. An dem nächsten orthogonalen Punkt auf der ersten Trajektorie wird dann ein korrespondierender Zeitstempel t_{N} bestimmt 107.

Der korrespondierende Zeitstempel t_{N} und die Parameter der kürzesten Differenzgerade 16 (x_{Differenzgerade}) werden dann an die zweite komplett integrierte Sensorik übermittelt 108, beispielsweise über eine Schnittstelle wie dem CAN-Bus.

Die zweite komplett integrierte Sensorik sucht dann den mit dem Zeitstempel t_{N} korrespondierenden Punkt auf der zweiten Trajektorie auf 204 und bestimmt 205 eine weitere aktuelle Position des Kraftfahrzeugs in der zweiten lokalen Umfeldkarte, in dem die kürzeste Differenzgerade vektoriell an den korrespondierenden Punkt addiert wird.

Im letzten Verfahrensschritt wird das Kraftfahrzeug automatisiert oder halb-automatisiert entlang der zweiten Trajektorie gefahren 206. Dies kann beispielsweise durch direktes Steuern einer Aktorik des Kraftfahrzeugs durch die zweite komplett integrierte Sensorik durchgeführt werden oder aber von einer anderen Einrichtung, an die die zweite komplett integrierte Sensorik lediglich die zweite Trajektorie und die weitere aktuelle Position in der zweiten lokalen Umfeldkarte übergibt und eine automatisierte Fahrt aktiviert.

### Bezugszeichenliste

- 1: Vorrichtung
- 2.1: erste Sensorik
- 2.2: zweite Sensorik
- 3.1: erste Steuerung
- 3.2: zweite Steuerung
- 4.1: erster Speicher
- 4.2: zweiter Speicher
- 5.1: erste Synchronisationseinrichtung
- 5.2: zweite Synchronisationseinrichtung
- 6.1: erste komplett integrierte Sensorik
- 6.2: zweite komplett integrierte Sensorik
- 7.1: erste Schnittstelle
- 7.2: zweite Schnittstelle
- 8: CAN-Bus
- 9.1: erste lokale Umfeldkarte
- 9.2: zweite lokale Umfeldkarte
- 10: Aktorik
- 11.1: erste Trajektorie
- 11.2: zweite Trajektorie
- 12.1: Datenpunkt
- 12.2: Datenpunkt
- 13.1: Zeitstempel
- 13.2: Zeitstempel
- 14.1: aktuelle Position
- 14.2: weitere aktuelle Position
- 15: nächster orthogonaler Punkt
- 16: kürzeste Differenzgerade
- 17: Zeitstempel t_{N}
- 18: korrespondierender Punkt
- 19: Zeitbasis
- 20: Tangente
- 21: Daten
- 22: relative Position
- 50: Kraftfahrzeug
- 100-108: Verfahrensschritte
- 200-206: Verfahrensschritte

## Patentansprüche

1. Verfahren zum Synchronisieren einer ersten lokalen Umfeldkarte (9.1) mit einer zweiten lokalen Umfeldkarte (9.2) in einem Umfeld eines Kraftfahrzeugs (50), umfassend die folgenden Schritte:
Erfassen von ersten Umfelddaten des Umfeldes des Kraftfahrzeugs (50) durch eine erste Sensorik (2.1) einer ersten Steuerung (3.1) des Kraftfahrzeugs (50),
Erfassen von zweiten Umfelddaten des Umfeldes des Kraftfahrzeugs (50) durch eine zweite Sensorik (2.2) einer zweiten Steuerung (3.2) des Kraftfahrzeugs (50),
Bereitstellen der ersten lokalen Umfeldkarte (9.1) in der ersten Steuerung (3.1) und der zweiten lokalen Umfeldkarte (9.2) in der zweiten Steuerung (3.2),
Bereitstellen einer ersten Trajektorie (11.1) des Kraftfahrzeugs (50) in der ersten lokalen Umfeldkarte (9.1),
Bereitstellen einer zweiten Trajektorie (11.2) des Kraftfahrzeugs (50) in der zweiten lokalen Umfeldkarte (9.2),
wobei die erste Trajektorie (11.1) und die zweite Trajektorie (11.2) die gleiche physikalische Trajektorie in dem Umfeld beschreiben,
Bestimmen einer aktuellen Position (14.1) des Kraftfahrzeugs (50) in der ersten lokalen Umfeldkarte (9.1) durch die erste Steuerung (3.1) durch Auswerten der ersten Umfelddaten,
Synchronisieren der ersten lokalen Umfeldkarte (9.1) mit der zweiten lokalen Umfeldkarte (9.2),
**dadurch gekennzeichnet dass**, das Synchronisieren folgende Schritte umfasst:
Bestimmen einer relativen Position (22) zur ersten Trajektorie (11.1) in der ersten lokalen Umfeldkarte (9.1) durch die erste Steuerung (3.1),
Bestimmen einer weiteren aktuellen Position (14.2) des Kraftfahrzeugs (50) in der zweiten lokalen Umfeldkarte (9.2) durch die zweite Steuerung (3.2) durch Auswerten der relativen Position (22) in Bezug auf die zweite Trajektorie (11.2), wobei Datenpunkte (12.1, 12.2) der ersten und zweiten Trajektorie (11.1, 11.2) jeweils mit Zeitstempeln (13.1, 13.2) markiert sind oder werden, wobei die Zeitstempel (13.1, 13.2) der ersten und der zweiten Trajektorie (11.1, 11.2) die gleiche Zeitbasis (19) aufweisen,
und wobei das Synchronisieren folgende Schritte in der ersten Steuerung (3.1) umfasst:
Bestimmen eines nächsten orthogonalen Punktes (15) auf der ersten Trajektorie (11.1), wobei der nächste orthogonale Punkt (15) durch einen Punkt auf der ersten Trajektorie (11.1) gebildet wird, an dem eine kürzeste Differenzgerade (16) zwischen der aktuellen Position (14.1) des Kraftfahrzeugs (50) und der ersten Trajektorie (11.1) auf einer Tangente (20) an der ersten Trajektorie (11.1) senkrecht steht,
Bestimmen eines mit dem nächsten orthogonalen Punkt (15) korrespondierenden Zeitstempels t_{N} (17) auf der ersten Trajektorie (11.1);
und wobei das Synchronisieren anschließend ferner folgende Schritte in der zweiten Steuerung (3.2) umfasst:
Aufsuchen eines mit dem bestimmten Zeitstempel t_{N} (17) korrespondierenden Punktes (18) auf der zweiten Trajektorie (11.2),
Bestimmen einer weiteren aktuellen Position (14.2) des Kraftfahrzeugs (50) in der zweiten lokalen Umfeldkarte (9.2) durch vektorielles Addieren der kürzesten Differenzgeraden (16) am korrespondierenden Punkt (18) auf der zweiten Trajektorie (11.2), wobei die kürzeste Differenzgerade (16) senkrecht auf einer Tangente (20) am korrespondierenden Punkt (18) steht.

2. Verfahren nach Anspruch 1, **dadurch gekennzeichnet, dass** das Synchronisieren ein Austauschen von Daten (21) zwischen der ersten Steuerung (3.1) und der zweiten Steuerung (3.2) umfasst, wobei die Daten (21) über eine Schnittstelle (7.1, 7.2) und/oder Bus (8) übertragen werden.

3. Verfahren nach Anspruch 1 oder 2, **dadurch gekennzeichnet, dass** die Daten (21) lediglich den korrespondierenden Zeitstempel t_{N} (17) und eine Länge und eine Orientierung der kürzesten Differenzgeraden (16) umfassen.

4. Verfahren nach einem der Ansprüche 1 bis 3, **dadurch gekennzeichnet, dass** das Bereitstellen der ersten Trajektorie (11.1) und das Bereitstellen der zweiten Trajektorie (11.2) ein Erfassen der ersten Trajektorie (11.1) und ein Erfassen der zweiten Trajektorie (11.2) umfasst,
wobei den Datenpunkten (12.1) der ersten Trajektorie (11.1) und den Datenpunkten (12.2) der zweiten Trajektorie (11.2) zeitgleich mit dem jeweiligen Erfassen die Zeitstempel (13.1, 13.2) zugeordnet werden.

5. Verfahren nach einem der Ansprüche 1 bis 4, **dadurch gekennzeichnet, dass** das Synchronisieren ein räumliches Interpolieren der ersten Trajektorie (11.1) und/oder der zweiten Trajektorie (11.2) umfasst.

6. Verfahren nach einem der Ansprüche 1 bis 5, **dadurch gekennzeichnet, dass** das Synchronisieren ein zeitliches Interpolieren der Zeitstempel (13.1, 13.2) der ersten Trajektorie (11.1) und/oder der zweiten Trajektorie (11.2) umfasst.

7. Vorrichtung (1) zum Synchronisieren einer ersten lokalen Umfeldkarte (9.1) mit einer zweiten lokalen Umfeldkarte (9.2) in einem Umfeld eines Kraftfahrzeugs (50), umfassend:
eine erste Steuerung (3.1) mit einer ersten Sensorik (2.1),
eine zweite Steuerung (3.2) mit einer zweiten Sensorik (2.2),
wobei die erste Steuerung (3.1) derart ausgebildet ist, von der ersten Sensorik (3.1) erfasste Umfelddaten auszuwerten und eine aktuelle Position (14.1) des Kraftfahrzeugs(50) mittels der ausgewerteten Umfelddaten in der ersten lokalen Umfeldkarte (9.1) zu bestimmen und eine erste Trajektorie (11.1) des Kraftfahrzeugs (50) in der ersten lokalen Umfeldkarte (9.1) bereitzustellen,
und wobei die zweite Steuerung (3.2) derart ausgebildet ist, von der zweiten Sensorik (2.2) erfasste Umfelddaten auszuwerten und eine zweite Trajektorie (11.2) des Kraftfahrzeugs (50) in der zweiten lokalen Umfeldkarte (9.2) bereitzustellen,
wobei die erste Trajektorie (11.1) und die zweite Trajektorie (11.2) eine gleiche physikalische Trajektorie im Umfeld beschreiben,
und wobei die erste Steuerung (3.1) ferner eine erste Synchronisationseinrichtung (5.1) umfasst, und
wobei die zweite Steuerung (3.2) eine zweite Synchronisationseinrichtung (5.2) umfasst,
wobei die erste und die zweite Synchronisationseinrichtung (5.1, 5.2) derart ausgebildet sind, die erste lokale Umfeldkarte (9.1) mit der zweiten lokalen Umfeldkarte (9.2) zu synchronisieren, **dadurch gekennzeichnet dass**, die erste Synchronisationseinrichtung (5.1) dazu eine relative Position (22) des Kraftfahrzeugs (50) zur ersten Trajektorie (11.1) in der ersten lokalen Umfeldkarte (9.1) bestimmt und die zweite Synchronisationseinrichtung (5.2) eine weitere aktuelle Position (14.2) des Kraftfahrzeugs (50) in der zweiten lokalen Umfeldkarte (9.2) durch Auswerten der relativen Position (22) in Bezug auf die zweite Trajektorie (11.2) bestimmt, wobei
Datenpunkte (12.1, 12.2) der ersten und der zweiten Trajektorie (11.1, 11.2) mit Zeitstempeln (13.1, 13.2) markiert sind, wobei die Zeitstempel (13.1, 13.2) der Datenpunkte (12.1, 12.2) der ersten und der zweiten Trajektorie (11.1, 11.2) eine gleiche Zeitbasis (19) aufweisen, und
wobei die erste Synchronisationseinrichtung (6.1) zum Synchronisieren derart ausgebildet ist, einen nächsten orthogonalen Punkt (15) auf der ersten Trajektorie (11.1) zu bestimmen, wobei der nächste orthogonale Punkt (15) durch einen Punkt auf der ersten Trajektorie (11.1) gebildet wird, an dem eine kürzeste Differenzgerade (16) zwischen der aktuellen Position (14.1) des Kraftfahrzeugs (50) und der ersten Trajektorie (11.1) senkrecht auf einer Tangente (20) an der ersten Trajektorie (11.1) steht, und einen mit dem nächsten orthogonalen Punkt (15) korrespondierenden Zeitstempel t_{N} (17) auf der ersten Trajektorie (11.1) zu bestimmen;
und wobei die zweite Synchronisationseinrichtung (6.2) zum Synchronisieren derart ausgebildet ist, einen mit dem Zeitstempel t_{N} (17) korrespondierenden Punkt (18) auf der zweiten Trajektorie (11.2) zu bestimmen und eine weitere aktuelle Position (14.2) des Kraftfahrzeugs (50) in der zweiten lokalen Umfeldkarte (9.2) durch vektorielles Addieren der kürzesten Differenzgeraden (16) am korrespondierenden Punkt (18) auf der zweiten Trajektorie (11.2) zu bestimmen, wobei die kürzeste Differenzgerade (16) senkrecht auf einer Tangente (20) am korrespondierenden Punkt (18) steht.

8. Vorrichtung (1) nach Anspruch 7, **dadurch gekennzeichnet, dass** die erste Steuerung (3.1) eine erste Schnittstelle (7.1) umfasst, und
die zweite Steuerung (3.2) eine zweite Schnittstelle (7.2) umfasst,
wobei die erste Steuerung (3.1) derart ausgebildet ist, den bestimmten Zeitstempel t_{N} (17) und eine Länge und eine Orientierung der kürzesten Differenzgeraden (16) über die erste Schnittstelle (7.1) als Daten (21) zu versenden, und wobei die zweite Steuerung (3.2) derart ausgebildet ist, den bestimmten Zeitstempel t_{N} (17) und die Länge und die Orientierung der kürzesten Differenzgeraden (16) als Daten (21) über die zweite Schnittstelle (7.2) zu empfangen.

## Claims

1. Method for synchronizing a first local environment map (9.1) with a second local environment map (9.2) in an environment of a motor vehicle (50), comprising the following steps:
acquiring first environment data of the environment of the motor vehicle (50) by means of a first sensor system (2.1) of a first controller (3.1) of the motor vehicle (50),
acquiring second environment data of the environment of the motor vehicle (50) by means of a second sensor system (2.2) of a second controller (3.2) of the motor vehicle (50),
providing the first local environment map (9.1) in the first controller (3.1) and the second local environment map (9.2) in the second controller (3.2),
providing a first trajectory (11.1) of the motor vehicle (50) in the first local environment map (9.1),
providing a second trajectory (11.2) of the motor vehicle (50) in the second local environment map (9.2),
wherein the first trajectory (11.1) and the second trajectory (11.2) describe the same physical trajectory in the environment,
determining a current position (14.1) of the motor vehicle (50) in the first local environment map (9.1) by means of the first controller (3.1) by evaluating the first environment data,
synchronizing the first local environment map (9.1) with the second local environment map (9.2),
**characterized in that** the synchronization comprises the following steps:
determining a relative position (22) with respect to the first trajectory (11.1) in the first local environment map (9.1) by means of the first controller (3.1),
determining a further current position (14.2) of the motor vehicle (50) in the second local environment map (9.2) by means of the second controller (3.2) by evaluating the relative position (22) with respect to the second trajectory (11.2), wherein
data points (12.1, 12.2) of the first and second trajectories (11.1, 11.2) are each marked with time stamps (13.1, 13.2), wherein the time stamps (13.1, 13.2) of the first and second trajectories (11.1, 11.2) have the same time base (19),
and wherein the synchronization comprises the following steps in the first controller (3.1):
determining a subsequent orthogonal point (15) on the first trajectory (11.1), wherein the next orthogonal point (15) is formed by a point on the first trajectory (11.1) at which a shortest different straight line (16) between the current position (14.1) of the motor vehicle (50) and the first trajectory (11.1) is perpendicular to a tangent (20) on the first trajectory (11.1),
determining a time stamp t_{N} (17), corresponding to the next orthogonal point (15), on the first trajectory (11.1);
and wherein the synchronization subsequently also comprises the following steps in the second controller (3.2):
searching for a point (18), corresponding to the determined time stamp t_{N} (17), on the second trajectory (11.2),
determining a further current position (14.2) of the motor vehicle (50) in the second local environment map (9.2) by vectoral addition of the shortest different straight line (16) at the corresponding point (18) on the second trajectory (11.2), wherein the shortest different straight line (16) is perpendicular to a tangent (20) at the corresponding point (18).

2. Method according to Claim 1, **characterized in that** the synchronization comprises exchanging data (21) between the first controller (3.1) and the second controller (3.2), wherein the data (21) is transmitted via an interface (7.1, 7.2) and/or bus (8) .

3. Method according to Claim 1 or 2, **characterized in that** the data (21) comprises merely the corresponding time stamp t_{N} (17) and a length and an orientation of the shortest different straight line (16) .

4. Method according to one of Claims 1 to 3, **characterized in that** the provision of the first trajectory (11.1) and the provision of the second trajectory (11.2) comprise acquiring the first trajectory (11.1) and acquiring the second trajectory (11.2),
wherein the data points (12.1) of the first trajectory (11.1) and the data points (12.2) of the second trajectory (11.2) are assigned the time stamps (13.1, 13.2) simultaneously with the respective acquisition process.

5. Method according to one of Claims 1 to 4, **characterized in that** the synchronization comprises spatial interpolation of the first trajectory (11.1) and/or of the second trajectory (11.2).

6. Method according to one of Claims 1 to 5, **characterized in that** the synchronization comprises chronological interpolation of the time stamps (13.1, 13.2) of the first trajectory (11.1) and/or of the second trajectory (11.2).

7. Device (1) for synchronizing a first local environment map (9.1) with a second local environment map (9.2) in an environment of a motor vehicle (50),
comprising:
a first controller (3.1) with a first sensor system (2.1),
a second controller (3.2) with a second sensor system (2.2),
wherein the first controller (3.1) is designed to evaluate environment data acquired by the first sensor system (3.1), and to determine a current position (14.1) of the motor vehicle (50) by means of the evaluated environment data in the first local environment map (9.1), and to provide a first trajectory (11.1) of the motor vehicle (50) in the first local environment map (9.1),
and wherein the second controller (3.2) is designed to evaluate environment data acquired by the second sensor system (2.2) and to provide a second trajectory (11.2) of the motor vehicle (50) in the second local environment map (9.2), wherein the first trajectory (11.1) and the second trajectory (11.2) describe the same physical trajectory in the environment,
and wherein the first controller (3.1) also comprises a first synchronization device (5.1), and wherein the second controller (3.2) comprises a second synchronization device (5.2),
wherein the first and the second synchronization devices (5.1, 5.2) are designed to synchronize the first local environment map (9.1) with the second local environment map (9.2), **characterized in that** the first synchronization device (5.1) is determined for this purpose a relative position (22) of the motor vehicle (50) with respect to the first trajectory (11.1) in the first local environment map (9.1), and the second synchronization device (5.2) determines a further current position (14.2) of the motor vehicle (50) in the second local environment map (9.2) by evaluating the relative position (22) with respect to the second trajectory (11.2), wherein
data points (12.1, 12.2) of the first and second trajectories (11.1, 11.2) are marked with time stamps (13.1, 13.2), wherein the time stamps (13.1, 13.2) of the data points (12.1, 12.2) of the first and second trajectories (11.1, 11.2) have the same time base (19), and
wherein for the purpose of synchronization the first synchronization device (6.1) is designed to determine a subsequent orthogonal point (15) on the first trajectory (11.1), wherein the subsequent orthogonal point (15) is formed by a point on the first trajectory (11.1) at which a shortest different straight line (16) between the current position (14.1) of the motor vehicle (50) and the first trajectory (11.1) is perpendicular to a tangent (20) at the first trajectory (11.1), and to determine a time stamp t_{N} (17), corresponding to the next orthogonal point (15), on the first trajectory (11.1); and for the purpose of synchronization the second synchronization device (6.2) is designed to determine a point (18), corresponding to the time stamp t_{N} (17), on the second trajectory (11.2) and to determine a further current position (14.2) of the motor vehicle (50) in the second local environment map (9.2) by vectoral addition of the shortest different straight line (16) at the corresponding point (18) on the second trajectory (11.2), wherein the shortest different straight line (16) is perpendicular to a tangent (20) at the corresponding point (18).

8. Device (1) according to Claim 7, **characterized in that** the first controller (3.1) comprises a first interface (7.1), and the second controller (3.2) comprises a second interface (7.2), wherein the first controller (3.1) is designed to transmit the determined time stamp t_{N} (17) and a length and an orientation of the shortest different straight line (16) as data (21) via the first interface (7.1), and wherein the second controller (3.2) is designed to receive the determined time stamp t_{N} (17) and the length and the orientation of the shortest different straight line (16) as data (21) via the second interface (7.2).

## Revendications

1. Procédé de synchronisation d'une première carte d'environnement locale (9.1) avec une deuxième carte d'environnement locale (9.2) dans un environnement de véhicule automobile (50), comprenant les étapes suivantes :
l'acquisition de premières données d'environnement de l'environnement du véhicule automobile (50) par un premier système de capteurs (2.1) d'un premier dispositif de commande (3.1) du véhicule automobile (50),
l'acquisition de deuxièmes données d'environnement de l'environnement du véhicule automobile (50) par un deuxième système de capteurs (2.2) d'un deuxième dispositif de commande (3.2) du véhicule automobile (50), la fourniture de la première carte d'environnement locale (9.1) dans le premier dispositif de commande (3.1) et de la deuxième carte d'environnement locale (9.2) dans le deuxième dispositif de commande (3.2),
la fourniture d'une première trajectoire (11.1) du véhicule automobile (50) dans la première carte d'environnement locale (9.1),
la fourniture d'une deuxième trajectoire (11.2) du véhicule automobile (50) dans la deuxième carte d'environnement locale (9.2),
dans lequel la première trajectoire (11.1) et la deuxième trajectoire (11.2) décrivent la même trajectoire physique dans l'environnement,
la détermination d'une position actuelle (14.1) du véhicule automobile (50) dans la première carte d'environnement locale (9.1) par le premier dispositif de commande (3.1) par évaluation des premières données d'environnement,
la synchronisation de la première carte d'environnement locale (9.1) avec la deuxième carte d'environnement locale (9.2),
**caractérisé en ce que** la synchronisation comprend les étapes suivantes :
la détermination d'une position relative (22) par rapport à la première trajectoire (11.1) dans la première carte d'environnement locale (9.1) par le premier dispositif de commande (3.1),
la détermination d'une autre position actuelle (14.2) du véhicule automobile (50) dans la deuxième carte d'environnement locale (9.2) par le deuxième dispositif de commande (3.2) par évaluation de la position relative (22) par rapport à la deuxième trajectoire (11.2), dans lequel
des points de données (12.1, 12.2) des première et deuxième trajectoires (11.1, 11.2) sont ou seront respectivement marqués par des marqueurs temporels (13.1, 13.2), dans lequel les marqueurs temporels (13.1, 13.2) des première et deuxième trajectoires (11.1, 11.2) possèdent la même base de temps (19),
et dans lequel la synchronisation comprend les étapes suivantes dans le premier dispositif de commande (3.1) :
la détermination d'un point orthogonal suivant (15) sur la première trajectoire (11.1), dans lequel le point orthogonal suivant (15) est formé par un point sur la première trajectoire (11.1) au niveau duquel une droite de différence la plus courte (16) entre la position actuelle (14.1) du véhicule automobile (50) et la première trajectoire (11.1) est perpendiculaire à une tangente (20) à la première trajectoire (11.1),
la détermination d'un marqueur temporel t_{N} (17) correspondant au point orthogonal suivant (15) sur la première trajectoire (11.1) ;
et dans lequel la synchronisation comprend ensuite en outre les étapes suivantes dans le deuxième dispositif de commande (3.2) :
la recherche d'un point (18) sur la deuxième trajectoire (11.2) correspondant au marqueur temporel déterminé t_{N} (17), la détermination d'une autre position actuelle (14.2) du véhicule automobile (50) dans la deuxième carte d'environnement locale (9.2) par addition vectorielle de la droite de différence la plus courte (16) au niveau du point correspondant (18) sur la deuxième trajectoire (11.2), dans lequel la droite de différence la plus courte (16) est perpendiculaire à une tangente (20) au point correspondant (18).

2. Procédé selon la revendication 1, **caractérisé en ce que** la synchronisation comprend un échange de données (21) entre le premier dispositif de commande (3.1) et le deuxième dispositif de commande (3.2), dans lequel les données (21) sont transmises par le biais d'une interface (7.1, 7.2) et/ou d'un bus (8).

3. Procédé selon la revendication 1 ou 2, **caractérisé en ce que** les données (21) comprennent uniquement le marqueur temporel correspondant t_{N} (17) et une longueur et une orientation de la droite de différence la plus courte (16).

4. Procédé selon l'une des revendications 1 à 3, **caractérisé en ce que** la fourniture de la première trajectoire (11.1) et la fourniture de la deuxième trajectoire (11.2) comprennent une acquisition de la première trajectoire (11.1) et une acquisition de la deuxième trajectoire (11.2),
dans lequel le marqueur temporel (13.1, 13.2) est associé aux points de données (12.1) de la première trajectoire (11.1) et aux points de données (12.2) de la deuxième trajectoire (11.2) en même temps que l'acquisition respective.

5. Procédé selon l'une des revendications 1 à 4, **caractérisé en ce que** la synchronisation comprend une interpolation spatiale de la première trajectoire (11.1) et/ou de la deuxième trajectoire (11.2)

6. Procédé selon l'une des revendications 1 à 5, **caractérisé en ce que** la synchronisation comprend une interpolation temporelle des marqueurs temporels (13.1, 13.2) de la première trajectoire (11.1) et/ou de la deuxième trajectoire (11.2).

7. Dispositif (1) de synchronisation d'une première carte d'environnement locale (9.1) avec une deuxième carte d'environnement locale (9.2) dans un environnement de véhicule automobile (50), comprenant :
un premier dispositif de commande (3.1) comportant un premier système de capteurs (2.1),
un deuxième dispositif de commande (3.2) comportant un deuxième système de capteurs (2.2),
dans lequel le premier dispositif de commande (3.1) est conçu pour évaluer des données d'environnement acquises par le premier système de capteurs (3.1) et pour déterminer une position actuelle (14.1) du véhicule automobile (50) au moyen des données d'environnement évaluées dans la première carte d'environnement locale (9.1) et pour fournir une première trajectoire (11.1) du véhicule automobile (50) dans la première carte d'environnement locale (9.1),
et dans lequel le deuxième dispositif de commande (3.2) est conçu pour évaluer des données d'environnement acquises par le deuxième système de capteurs (2.2) et pour fournir une deuxième trajectoire (11.2) du véhicule automobile (50) dans la deuxième carte d'environnement locale (9.2),
dans lequel la première trajectoire (11.1) et la deuxième trajectoire (11.2) décrivent une même trajectoire physique dans l'environnement,
et dans lequel le premier dispositif de commande (3.1) comprend en outre un premier dispositif de synchronisation (5.1), et
dans lequel le deuxième dispositif de commande (3.2) comprend un deuxième dispositif de synchronisation (5.2), dans lequel les premier et deuxième dispositifs de synchronisation (5.1, 5.2) sont conçus pour synchroniser la première carte d'environnement locale (9.1) avec la deuxième carte d'environnement locale (9.2),
**caractérisé en ce que** le premier dispositif de synchronisation (5.1) détermine à cet effet une position relative (22) du véhicule automobile (50) par rapport à la première trajectoire (11.1) dans la première carte d'environnement locale (9.1) et le deuxième dispositif de synchronisation (5.2) détermine une autre position actuelle (14.2) du véhicule automobile (50) dans la deuxième carte d'environnement locale (9.2) par évaluation de la position relative (22) par rapport à la deuxième trajectoire (11.2), dans lequel
des points de données (12.1, 12.2) des première et deuxième trajectoires (11.1, 11.2) sont marqués par des marqueurs temporels (13.1, 13.2), dans lequel les marqueurs temporels (13.1, 13.2) des points de données (12.1, 12.2) des première et deuxième trajectoires (11.1, 11.2) possèdent une même base de temps (19), et
dans lequel, pour la synchronisation, le premier dispositif de synchronisation (6.1) est conçu pour déterminer un point orthogonal suivant (15) sur la première trajectoire (11.1), dans lequel le point orthogonal suivant (15) est formé par un point sur la première trajectoire (11.1) au niveau duquel une droite de différence la plus courte (16) entre la position actuelle (14.1) du véhicule automobile (50) et la première trajectoire (11.1) est perpendiculaire à une tangente (20) à la première trajectoire (11.1), et pour déterminer un marqueur temporel t_{N} (17) correspondant au point orthogonal suivant (15) sur la première trajectoire (11.1) ;
et dans lequel, pour la synchronisation, le deuxième dispositif de synchronisation (6.2) est conçu pour déterminer un point (18) sur la deuxième trajectoire (11.2) correspondant au marqueur temporel t_{N} (17) et pour déterminer une autre position actuelle (14.2) du véhicule automobile (50) dans la deuxième carte d'environnement locale (9.2) par addition vectorielle de la droite de différence la plus courte (16) au niveau du point correspondant (18) sur la deuxième trajectoire (11.2), dans lequel la droite de différence la plus courte (16) est perpendiculaire à une tangente (20) au point correspondant (18).

8. Dispositif (1) selon la revendication 7, **caractérisé en ce que** le premier dispositif de commande (3.1) comprend une première interface (7.1), et le deuxième dispositif de commande (3.2) comprend une deuxième interface (7.2), dans lequel le premier dispositif de commande (3.1) est conçu pour transmettre en tant que données (21), par le biais de la première interface (7.1), le marqueur temporel déterminé t_{N} (17) ainsi qu'une longueur et une orientation de la droite de différence la plus courte (16), et dans lequel le deuxième dispositif de commande (3.2) est conçu pour recevoir, en tant que données (21), par le biais de la deuxième interface (7.2), le marqueur temporel déterminé t_{N} (17) ainsi que la longueur et l'orientation de la droite de différence la plus courte (16).
